# EUROPEAN PATENT APPLICATION

(11) **EP 4 765 989 A1**
(43) Date of publication of application: **24.06.2026**
(21) Application number: 24870378.7
(22) Date of filing: 04.09.2024
(51) Int. Cl.: H04W 72/23

(54) **COMMUNICATION METHOD AND APPARATUS**

(30) Priority: 27.09.2023 CN 202311266003
(71) Applicant: HUAWEI TECHNOLOGIES CO., LTD., Shenzhen 518129 (CN)
(72) Inventor: LI, Bingzhao, Shenzhen, Guangdong 518129 (CN); CHANG, Junren, Shenzhen, Guangdong 518129 (CN); QIANG, Li, Shenzhen, Guangdong 518129 (CN); LIU, Nannan, Shenzhen, Guangdong 518129 (CN)
(74) Representative: Goddar, Heinz J.
(86) International application number: PCT/CN2024/116889
(87) International publication number: WO 2025/066832

(57) **Abstract**

Embodiments of this application disclose a communication method and apparatus. The method includes: An access network device receives a first packet delay budget PDB corresponding to a quality of service QoS flow of a first service; and the access network device sends first indication information to a terminal device, where the first indication information indicates that an estimated delay of the first service is greater than the first PDB. Alternatively, the access network device flexibly adjusts a setting of a transmission delay of the first service based on the first PDB and a second PDB. The method can avoid impact of a data transmission delay on a service.

## Description

This application claims priority to Chinese Patent Application No. 202311266003.5, filed with the China National Intellectual Property Administration on September 27, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

A 5th generation mobile communication technology (5th generation, 5G) system implements forwarding control on service data of a service based on a quality of service (quality of service, QoS) mechanism. Parameters of QoS include a delay budget value. The delay budget value may be referred to as a packet delay budget (packet delay budget, PDB). The value is used to control a delay requirement that needs to be met for transmission of a data packet corresponding to the service over a network.

Regardless of whether the service is an uplink service or a downlink service, a data transmission delay affects the service. For example, if transmission of a data packet cannot be completed within the delay budget value, the data packet is discarded. Specifically, for the downlink service, a base station may control the delay budget value and discard processing. For the uplink service, the base station may configure a discard timer for a terminal device based on the delay budget value. If the data packet is not successfully sent when transmission time of the data packet exceeds the discard timer, the data packet is discarded.

How to avoid impact of a data transmission delay on a service is an urgent problem to be resolved in the industry.

### SUMMARY

Embodiments of this application disclose a communication method and apparatus, to avoid impact of a data transmission delay on a service.

According to a first aspect, this application discloses a communication method. The method may include:
An access network device receives a first packet delay budget PDB corresponding to a quality of service QoS flow of a first service; and
the access network device sends first indication information to a terminal device, where the first indication information indicates that an estimated delay of the first service is greater than the first PDB.

In this embodiment of this application, the access network device may send the first indication information to the terminal device. In this case, when determining that the estimated delay of the first service is greater than the first PDB, the terminal device may perform corresponding processing based on the first service, to reduce impact of a transmission delay on the first service.

For example, when the first service is an uplink service, the terminal device may perform local processing on uplink data, to avoid excessively long waiting time of a user of the terminal device caused by waiting for cloud data. For another example, when the first service is a downlink service, the terminal device may send an indication message to a server corresponding to the downlink service.

With reference to the first aspect, in a possible implementation, that the access network device sends the first indication information to the terminal device includes:

When determining that the estimated delay of the first service is greater than the first PDB, the access network device sends the first indication information to the terminal device.

With reference to the first aspect, in a possible implementation, the estimated delay of the first service is duration that is estimated by the access network device and that is needed for transmission of service data of the first service.

In a possible implementation, the first indication information may indicate that the first PDB cannot be completed.

With reference to the first aspect, in a possible implementation, the method further includes:

The access network device receives a second PDB corresponding to the QoS flow, where the second PDB is greater than the first PDB.

In this embodiment of this application, the access network device may receive the first PDB and the second PDB, and may further flexibly adjust scheduling of the first service based on the second PDB and the first PDB.

With reference to the first aspect, in a possible implementation, the method further includes:

The access network device sends duration information of a discard timer to the terminal device, where the duration information of the discard timer is determined based on the second PDB.

In this embodiment of this application, because the duration information of the discard timer is determined based on the second PDB, and the second PDB is greater than the first PDB, in this method, a case in which the terminal device discards data of the first service when the estimated delay of the first service is greater than the first PDB can be avoided, and impact of a data transmission delay on the service can be avoided.

It should be noted that, for some uplink services, discarding of some service data affects the entire service data. Therefore, the foregoing method can effectively ensure normal running of the services.

With reference to the first aspect, in a possible implementation, the method further includes:

The access network device sends, to the terminal device, configuration information of a data bearer corresponding to the QoS flow, where the configuration information is obtained based on the first PDB and/or the second PDB.

With reference to the first aspect, in a possible implementation, the method further includes:

The access network device sends the first PDB and the second PDB to the terminal device.

With reference to the first aspect, in a possible implementation, the method further includes:

The access network device schedules the first service based on a requirement of the first PDB; and
when determining that a transmission delay of the first service is greater than the first PDB, the access network device schedules the first service based on a requirement of the second PDB.

In this embodiment of this application, a network is allowed to fall back to the second PDB when the first PDB is ensured as much as possible. In the method, the access network device may flexibly adjust a setting of a transmission delay, to ensure that different delays are flexibly used for a service when network transmission conditions are different.

With reference to the first aspect, in a possible implementation, the first indication information is carried in one of the following signaling: radio resource control RRC signaling, layer 2 signaling, and physical layer signaling.

With reference to the first aspect, in a possible implementation, the layer 2 signaling is one of the following information: MAC layer control information, packet data convergence protocol PDCP control information, and service data adaptation protocol SDAP control information.

With reference to the first aspect, in a possible implementation, the first indication information carries a sequence number of the first service or time information corresponding to a data packet of the first service.

According to a second aspect, this application discloses a communication method. The method may include:

A terminal device receives configuration information that is of a data bearer and that is sent by an access network device, where the data bearer is used for transmission of a first service; and
the terminal device receives first indication information sent by the access network device, where the first indication information indicates that an estimated delay of the first service is greater than a first packet delay budget PDB of the first service.

With reference to the second aspect, in a possible implementation, the method further includes:

The terminal device receives configuration information of a quality of service QoS flow from a core network device, where the QoS flow corresponds to the first PDB and a second PDB of the first service, and the second PDB is greater than the first PDB.

With reference to the second aspect, in a possible implementation, the method further includes:

In response to the first indication information, the terminal device performs local processing on service data of the first service, or sends second indication information to a server corresponding to the first service, where the second indication information indicates that the estimated delay of the first service is greater than the first PDB of the first service.

With reference to the second aspect, in a possible implementation, the method further includes:

The terminal device receives duration information that is of a discard timer and that is sent by the access network device, where the duration information of the discard timer is determined based on the second PDB, and the second PDB is greater than the first PDB.

With reference to the second aspect, in a possible implementation, the method further includes:

The terminal device receives the first PDB and the second PDB that are sent by the access network device, where the second PDB is greater than the first PDB.

With reference to the second aspect, in a possible implementation, the method further includes:

Before receiving the first indication information, the terminal device determines a remaining PDB based on the first PDB, where the remaining PDB indicates remaining time of a latency requirement for completing the first service; and
after receiving the first indication information, the terminal device determines the remaining PDB based on the second PDB.

With reference to the second aspect, in a possible implementation, the service data of the first service is a first image, and the method further includes:

The terminal device sends the first image to the access network device;
the terminal device displays a second image in response to the first indication information, where the second image is obtained by the terminal device by performing local processing on the first image;
the terminal device receives a third image sent by the access network device, where the third image is obtained based on the first image; and
the terminal device displays the third image.

According to a third aspect, this application discloses a communication method. The method may include:

A core network device sends a first packet delay budget PDB and a second PDB that correspond to a quality of service QoS flow of a first service, where the second PDB is greater than the first PDB.

In this embodiment of this application, the core network device sends, to an access network device and/or a terminal device, the first PDB and the second PDB that correspond to the QoS flow of the first service, so that the access network device can flexibly adjust a setting of a transmission delay based on the first PDB and the second PDB, to ensure that different delays are flexibly used for a service when network transmission conditions are different.

According to a fourth aspect, this application discloses a communication apparatus. The apparatus may include:
a receiving unit, configured to receive a first packet delay budget PDB corresponding to a quality of service QoS flow of a first service; and
a sending unit, configured to send first indication information to a terminal device, where the first indication information indicates that an estimated delay of the first service is greater than the first PDB.

With reference to the fourth aspect, in a possible implementation, when it is determined that the estimated delay of the first service is greater than the first PDB, the sending unit is configured to send the first indication information to the terminal device.

With reference to the fourth aspect, in a possible implementation, the estimated delay of the first service is duration that is estimated by the communication apparatus and that is needed for transmission of service data of the first service.

With reference to the fourth aspect, in a possible implementation, the receiving unit is configured to receive a second PDB corresponding to the QoS flow, where the second PDB is greater than the first PDB.

With reference to the fourth aspect, in a possible implementation, the sending unit is configured to send duration information of a discard timer to the terminal device, where the duration information of the discard timer is determined based on the second PDB.

With reference to the fourth aspect, in a possible implementation, the sending unit is configured to send, to the terminal device, configuration information of a data bearer corresponding to the QoS flow, where the configuration information is obtained based on the first PDB and/or the second PDB.

With reference to the fourth aspect, in a possible implementation, the sending unit is configured to send the first PDB and the second PDB to the terminal device.

With reference to the fourth aspect, in a possible implementation, the apparatus further includes a scheduling unit. The scheduling unit is configured to:
schedule the first service based on a requirement of the first PDB; and
when it is determined that a transmission delay of the first service is greater than the first PDB, schedule the first service based on a requirement of the second PDB.

With reference to the fourth aspect, in a possible implementation, the first indication information is carried in one of the following signaling: radio resource control RRC signaling, layer 2 signaling, and physical layer signaling.

With reference to the fourth aspect, in a possible implementation, the layer 2 signaling is one of the following information: MAC layer control information, packet data convergence protocol PDCP control information, and service data adaptation protocol SDAP control information.

With reference to the fourth aspect, in a possible implementation, the first indication information carries a sequence number of the first service or time information corresponding to a data packet of the first service.

According to a fifth aspect, this application discloses a communication apparatus. The apparatus may include:
a receiving unit, configured to receive configuration information that is of a data bearer and that is sent by an access network device, where the data bearer is used for transmission of a first service; and
a sending unit, configured to receive first indication information sent by the access network device, where the first indication information indicates that an estimated delay of the first service is greater than a first packet delay budget PDB of the first service.

With reference to the fifth aspect, in a possible implementation, the receiving unit is configured to receive configuration information of a quality of service QoS flow from a core network device, where the QoS flow corresponds to the first PDB and a second PDB of the first service, and the second PDB is greater than the first PDB.

With reference to the fifth aspect, in a possible implementation, the apparatus further includes a processing unit. The processing unit is configured to perform local processing on service data of the first service in response to the first indication information.

The sending unit is configured to send, in response to the first indication information, second indication information to a server corresponding to the first service, where the second indication information indicates that the estimated delay of the first service is greater than the first PDB of the first service.

With reference to the fifth aspect, in a possible implementation, the receiving unit is configured to receive duration information that is of a discard timer and that is sent by the access network device, where the duration information of the discard timer is determined based on the second PDB, and the second PDB is greater than the first PDB.

With reference to the fifth aspect, in a possible implementation, the receiving unit is configured to receive the first PDB and the second PDB that are sent by the access network device, where the second PDB is greater than the first PDB.

With reference to the fifth aspect, in a possible implementation, the apparatus further includes a determining unit. The determining unit is configured to: before the first indication information is received, determine a remaining PDB based on the first PDB, where the remaining PDB indicates remaining time of a delay requirement for completing the first service; and
after the first indication information is received, determine the remaining PDB based on the second PDB.

With reference to the fifth aspect, in a possible implementation, the service data of the first service is a first image, and the apparatus further includes a displaying unit.

The sending unit is configured to send the first image to the access network device.

The displaying unit is configured to display a second image in response to the first indication information, where the second image is obtained by the communication apparatus by performing local processing on the first image.

The receiving unit is configured to receive a third image sent by the access network device, where the third image is obtained based on the first image.

The displaying unit is configured to display the third image.

According to a sixth aspect, this application discloses a communication apparatus. The apparatus may include:
a sending unit, configured to send a first packet delay budget PDB and a second PDB that correspond to a quality of service QoS flow of a first service, where the second PDB is greater than the first PDB.

According to a seventh aspect, this application discloses a communication apparatus. The communication apparatus may be the access network device in the foregoing method embodiments, or a chip or a processor disposed in the access network device. The communication apparatus includes a processor. The processor is coupled to a memory. The memory is configured to store a program or instructions. When the program or the instructions are executed by the processor, the communication apparatus is caused to perform the method performed by the access network device, or the chip or the processor in the access network device in the foregoing method embodiments.

According to an eighth aspect, this application discloses a communication apparatus. The communication apparatus may be the terminal device in the foregoing method embodiments, or a chip or a processor disposed in the terminal device. The communication apparatus includes a processor. The processor is coupled to a memory. The memory is configured to store a program or instructions. When the program or the instructions are executed by the processor, the communication apparatus is caused to perform the method performed by the terminal device, or the chip or the processor in the terminal device in the foregoing method embodiments.

According to a ninth aspect, this application discloses a communication apparatus. The communication apparatus may be a core network device in the foregoing method embodiments, or a chip or a processor disposed in the core network device. The communication apparatus includes a processor. The processor is coupled to a memory. The memory is configured to store a program or instructions. When the program or the instructions are executed by the processor, the communication apparatus is caused to perform the method performed by the core network device, or the chip or the processor in the core network device in the foregoing method embodiments.

According to a tenth aspect, this application discloses a communication system. The communication system may include an access network device that performs the communication method disclosed in the first aspect and a terminal device that performs the communication method disclosed in the second aspect, and may further include a core network device that performs the communication method disclosed in the third aspect.

According to an eleventh aspect, this application discloses a computer-readable storage medium. The computer-readable storage medium stores a computer program or computer instructions. When the computer program or the computer instructions is/are run by a processor, the communication method disclosed in the foregoing aspects is implemented.

According to a twelfth aspect, this application discloses a chip, including a processor, configured to execute a program stored in a memory. When the program is executed, the chip is caused to perform the foregoing method.

In a possible implementation, the memory is located outside the chip.

According to a thirteenth aspect, this application discloses a computer program product. The computer program product includes computer program code. When the computer program code is run by a processor, the foregoing communication method is performed.

Beneficial effects of the fourth aspect to the thirteenth aspect are similar to beneficial effects of the corresponding method in the first aspect. For detailed descriptions, refer to the beneficial effects of the corresponding method.

### BRIEF DESCRIPTION OF DRAWINGS

FIG. 1 is a diagram of a 5G network architecture according to an embodiment of this application;
FIG. 2 is a diagram of a network architecture according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a diagram of a structure of a communication apparatus according to an embodiment of this application;
FIG. 7 is a diagram of a structure of another communication apparatus according to an embodiment of this application;
FIG. 8 is a diagram of a structure of still another communication apparatus according to an embodiment of this application;
FIG. 9 is a diagram of a structure of yet another communication apparatus according to an embodiment of this application; and
FIG. 10 is a diagram of a structure of still yet another communication apparatus according to an embodiment of this application.

### DESCRIPTION OF EMBODIMENTS

The following clearly describes embodiments of this application in detail with reference to the accompanying drawings in embodiments of this application.

Terms used in embodiments of this application are only used to explain specific embodiments of this application, but are not intended to limit this application.

For ease of understanding of the technical solutions in embodiments of this application, the following first briefly describes technologies and terms related to this application.

### I. 5G network architecture

A 5G network architecture defined in the 3rd generation partnership project (3rd generation partnership project, 3GPP) TS 23.501 standard is mainly divided into two parts: an access network (access network, AN) and a core network.

The access network may include a radio access network (radio access network, RAN) device, and is configured to implement a function related to radio access.

The core network mainly includes the following several key logical network elements: an access and mobility management function (access and mobility management function, AMF) network element, a session management function (session management function, SMF) network element, a user plane function (user plane function, UPF) network element, a policy control function (policy control function) network element, and a unified data management (unified data management, UDM) function network element. In addition, the core network may further include an authentication server function (authentication server function, AUSF) network element, a network slice selection function (network slice selection function, NSSF) network element, an application function (application function, AF) network element, and the like.

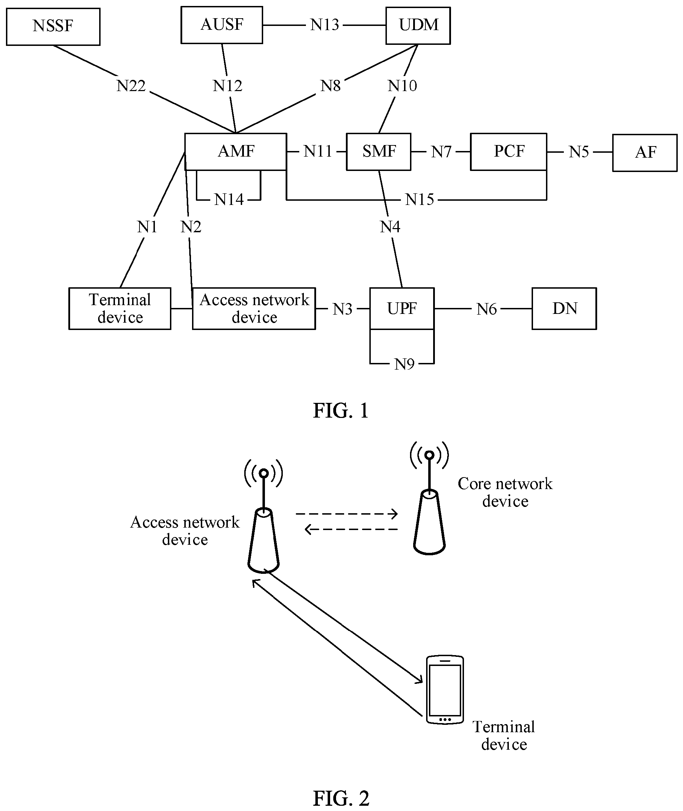

FIG. 1 is a diagram of a 5G network architecture according to an embodiment of this application. A terminal device may be a user equipment (user equipment, UE), for example, a mobile phone or an internet of things terminal device.

A DN is a data network (data network, DN), and is mainly used to provide a data transmission service for a user, for example, an internet protocol (internet protocol, IP) multimedia service (IP Multimedia Service, IMS).

Access network devices that provide radio access for the user are deployed in the RAN, and include but are not limited to an evolved NodeB (NodeB, eNB, or e-NodeB, evolved NodeB), a wireless fidelity (wireless fidelity, Wi-Fi) access point (access point, AP), and the like.

An AMF network element is mainly responsible for mobility management in a mobile network, for example, user location update, user network registration, and user switching.

An SMF network element is mainly responsible for session management in the mobile network, for example, session establishment, modification, and release. Specific functions are, for example, allocating an IP address to the user and selecting a UPF that provides a packet forwarding function.

A PCF network element is mainly responsible for providing policies such as a quality of service (quality of service, QoS) policy and a slice selection policy for the AMF and the SMF.

A UDM network element is mainly responsible for storing user data, for example, subscription information and authentication/authorization information.

An AF network element is mainly responsible for providing service requirements for a 3GPP network, for example, affecting service routing and interacting with the PCF network element to perform policy control.

A UPF network element is mainly responsible for processing, for example, forwarding and charging a user packet.

The terminal device accesses the DN by establishing a protocol data unit (Protocol data unit, PDU) session (PDU session) from the terminal device to the RAN, the UPF, and the DN.

An AUSF network element is mainly responsible for providing a terminal device authentication service for the AMF network element.

An NSSF network element is mainly responsible for selecting a network slice that serves the terminal device.

In addition, refer to FIG. 1. Nx represents a logical interface or a service-based interface between two network elements, and is used for communication between the network elements. For example, N1 is an interface between the terminal device and the AMF network element. N2 is an interface between the access network device and the AMF network element. N3 is an interface between the access network device and the UPF network element. N9 is an interface between different UPF network elements. N6 is an interface between the UPF network element and the DN. N4 is an interface between the UPF network element and the SMF network element. N11 is an interface between the AMF network element and the SMF network element. N7 is an interface between the SMF network element and the PCF network element. N5 is an interface between the PCF network element and the AF network element. N14 is an interface between different AMF network elements. N15 is an interface between the AMF network element and the PCF network element. N22 is an interface between the NSSF network element and the AMF network element. N12 is an interface between the AUSF network element and the AMF network element. N8 is an interface between the UDM network element and the AMF network element. N13 is an interface between the AUSF network element and the UDM network element.

### II. 5G QoS flow

In a 5G QoS framework, various services are mapped to QoS flows (or referred to as QoS flows) according to a specific rule. After the QoS flow reaches a RAN, the RAN maps the QoS flow to a user data bearer ((user) data radio bearer, DRB) for transmission.
1. Main parameters of a QoS flow include the following:
   a 5G quality of service identifier (5G QoS identifier, 5QI), an address resolution protocol (address resolution protocol, ARP), a guaranteed flow bit rate (guaranteed flow bit rate, GFBR) {for a GBR-type QoS flow}, a maximum flow bit rate (maximum flow bit rate, MFBR) {for a GBR-type QoS flow}, a session-aggregate maximum bit rate (session-aggregate maximum bit rate, Session-AMBR) {for a non-GBR-type QoS flow}, and a terminal device UE-AMBR {for a non-GBR-type QoS flow}. Session-AMBR is a maximum bandwidth shared by all non-GBR QoS flows of a PDU session, and is controlled by a UPF network element and a terminal device for execution. UE-AMBR is a maximum bandwidth shared by all non-GBR QoS flows of a terminal device, and is controlled by a RAN for execution.
2.5QI

The 5QI includes the following features: a resource type (GBR, non-GBR, or critical delay-critical GBR); a priority level; a delay budget value; a packet error loss rate; a maximum data burst volume (maximum data burst volume, MDBV) (applicable to a delay-critical GBR service); and an averaging window size (applicable to some GBR services).

The GBR type is usually used for a streaming media service, has a stable rate, has a requirement on a delay, and can tolerate a packet loss to some extent. Generally, after a GRB service is admitted, a network reserves a corresponding resource based on a rate requirement of the GRB service to ensure a transmission rate of a terminal device.

The non-GBR type is usually used for services such as web page browsing and file transfer protocol (file transfer protocol, FTP) downloading, has no fixed service rate requirement, is not particularly sensitive to a delay, but has a high requirement on a packet loss. The network provides a transmission rate of a terminal device in a best-effort scheduling mode in addition to reserving a resource for the GBR.

Table 1 describes meanings of some of the foregoing parameters.

**Table 1**

| Abbreviation | Full name | Meaning | Value range | Remarks | LTE comparison |
|---|---|---|---|---|---|
| RT | Resource type | Service type | GBR, delay-critical GRB, or non-GRB | All | Resource type (GBR or non-GRB) |
| | Resource type | | | | |
| PL | Priority level | Indicates a priority level in scheduling resources among QoS flows, where this parameter is used to differentiate between priority levels of QoS flows of a same UE or priority levels of QoS flows of different UEs, and a smaller value indicates a higher priority level | 1 to 127 | All | Priority (range adjustment) |
| | Priority level | | | | |
| PDB | Packet delay budget | Delay from a UE to a UPF, where for a service other than a delay-critical GBR service, this parameter is a "soft upper bound", and even if the PDB is exceeded, processing still needs to be performed | 0 to 1023 (0.5 ms) | | Packet delay budget, which is a delay from the UE to a PCEF |
| | Packet Delay Budget | | | | |
| PER | Packet error rate | Packet error rate, meaning that processing has been performed by a link layer (RLC) of a sender but submission to an upper layer protocol (PDCP) of a peer end of the sender fails, and used to guide configuration of appropriate link layer parameters (RLC and HARQ parameters) | x*10^{-k} (x, k: 0 to 9) | | Packet error loss rate |
| | Packet Error Rate | | | | |
| AW | Averaging window | Evaluation duration for a GFBR/MFBR | 0 to 4095 (ms) Default: 2000 ms | GRB | |
| | Averaging Window | | | | |
| MDBV | Maximum data burst volume | Maximum data burst volume, indicating a maximum amount of data to be transmitted or received in the PDB | 0 to 4095 bytes | Delay-critical GBR | |
| | Maximum Data Burst Volume | | | | |

Table 2 provides definitions for some 5QIs.

**Table 2**

| 5QI value | Resource type | Default priority level | Packet delay budget | Packet error rate | Default maximum data burst volume | Default averaging window | Example service |
|---|---|---|---|---|---|---|---|
| 1 | Guaranteed bit rate GBR | 20 | 100 ms | 10⁻² | | 2000 ms | Conversational voice |
| | | | | | | | Conversational Voice |
| 2 | | 40 | 150 ms | 10⁻³ | | 2000 ms | Conversational voice (live streaming) |
| | | | | | | | Conversational Video (Live Streaming) |
| 3 | | 30 | 50 ms | 10⁻³ | | 2000 ms | Real-time gaming |
| | | | | | | | Real-Time Gaming |
| 5 | Non-guaranteed bit rate Non-GBR | 10 | 100 ms | 10⁻⁶ | | | Signal transmitting |
| | | | | | | | IMS Signaling |
| 6 | | 60 | 300 ms | 10⁻⁶ | | | Video Video (Buffered Streaming) |
| 7 | | 70 | 100 ms | 10⁻³ | | | Voice Voice, video Video (Live Streaming), and interactive gaming Interactive Gaming |
| 8 | | 80 | 300 ms | 10⁻⁶ | | | Video Video (buffered streaming Buffered Streaming) |
| 81 | Critical delay-critical GBR | 11 | 5 ms | 10⁻⁵ | 160 B | 2000 ms | Remote control |
| | | | | | | | Remote control |

### 3. Delay budget value

Existing QoS includes a 5QI attribute, and the 5QI includes the delay budget value. The value is used to control a delay requirement that needs to be met for transmission of a data packet corresponding to a service over a network. If transmission of a packet cannot be completed within the delay, the packet is discarded. Specifically, for a downlink service, a base station controls the delay and discard processing. For an uplink service, the base station configures a discard timer for a UE based on the experimental budget value. For each data packet, if the data packet is not sent when the discard timer expires, the data packet is discarded.

### III. Device-cloud collaboration service

Device-cloud collaboration means that a cloud side assists a device side in completing some processing functions needed by a terminal for service processing. For example, device-cloud collaboration services may include a cloud-based photo enhancement service and a cloud-based game enhancement service.

### 1. Cloud-based photo enhancement service

Generally, after a terminal device takes a photo locally, the terminal device performs image processing locally, to meet a requirement for enhancing image quality. Common image post-processing technologies include denoising, super-resolution, dark light enhancement, facial beautification, and the like. Some of such processing needs high computational power. The terminal device is limited by a processing capability of the terminal device during local processing, and it is difficult to improve processing quality after the processing quality reaches a specific level.

To meet the requirement for enhancing image quality, one manner is that the terminal device transmits a photo to a cloud for processing. A large quantity of graphics processing units (graphic processing unit, GPU) may be deployed on the cloud for image processing. In this way, image quality after processing is better than that of a local image. A specific procedure may be as follows: After taking a photo, the terminal device uploads the photo to the cloud, and the cloud performs processing and then returns a cloud-processed photo to the terminal device for local display.

### 2. Cloud-based game enhancement service

Generally, a rendering effect of a game on a terminal device (for example, a mobile phone) is limited by rendering computational power. To obtain a better rendering effect, the terminal device may upload information, for example, data of a to-be-rendered three-dimensional model, a user location, and a rendering angle of view to a cloud side, for the cloud side to perform rendering. Then, the cloud side may return a rendering result to the terminal device, and the terminal device performs post-processing and then displays a post-processed result to the user.

### 3. Usage scenario of device-cloud collaboration services

Task processing of device-cloud collaboration services may be classified into cloud processing and local processing. For a same processing task, a processing manner may be selected based on an actual situation. A cloud processing result is applicable to two usage scenarios:

### (1) Real-time use

Real-time use means that a cloud processing result returned to a local end can completely replace a local processing effect. For example, photo enhancement can be returned to the local end within 3s, meeting a real-time processing effect. The task does not need to be processed locally.

For another example, in a game rendering scenario, if a to-be-uploaded 3D model can be completed in a given delay, for example, 10 ms, a downlink rendering result may be returned in real time, and a UE does not need to render the model locally, and can wait for a network to return the result and directly use the result.

### (2) Non-real-time use

If the result cannot be returned within 3s, AI processing needs to be performed locally on a processing result displayed locally in real time. In this case, the returned photo result is still meaningful and can be used as a non-real-time effect to update a local photo.

In the game rendering scenario, if uploading of the to-be-uploaded 3D model cannot be completed within given time, the model needs to be rendered locally for fallback. However, the model can continue to be uploaded and used as an input for subsequent frame rendering.

Currently, in an alternative (alternative) QoS technology, for a service, a core network may configure a plurality of sets of QoS parameters (for example, a GFBR and a PDB) for a base station. The base station selects, based on an actual situation that can be met, a set of QoS parameters for use, and notifies the core network of the set of QoS parameters. If the QoS parameters subsequently change, the core network may also be notified.

For example, the core network configures a plurality of sets of PDBs (for example, a first PDB and a second PDB) for a device-cloud collaboration service. When the first PDB cannot be met, the base station needs to send a reconfiguration to a UE, and modify a discard timer based on the second PDB. However, because a discard timer corresponding to the first PDB is used for a previous data packet, data may have been discarded. In this case, for a subsequent data packet, discard time can be prolonged only by using a timer corresponding to the second PDB. However, once some packets are discarded, the entire service is affected.

In view of this, embodiments of this application provide a communication method. According to the method, that the first PDB cannot be met may be notified to a terminal device in time, so that the UE may start local processing locally in time.

Based on the foregoing descriptions, to better understand a communication method and a related apparatus that are provided in this application, the following first describes a network architecture to which embodiments of this application are applied.

FIG. 2 is a diagram of a network architecture according to an embodiment of this application. As shown in FIG. 2, the network architecture may include a terminal device and an access network device. Optionally, a communication system may include a core network device.

The access network device is an entity that transmits or receives a signal, and is configured to communicate with the terminal device and a core network.

The terminal device is an entity that receives or transmits a signal, and is configured to perform wireless communication with a base station.

The core network device is configured to communicate with the terminal device through the access network device.

The terminal device may be connected to the access network device in a wireless manner, and may access the core network device through the access network device. The terminal device may be located at a fixed location, or may be mobile.

Optionally, embodiments of this application may be applied to a 5G system, or may be applied to another communication system, for example, a future 6th generation mobile communication technology (6th generation, 6G). This is not specifically limited in embodiments of this application.

Optionally, the terminal device in this application may be a user equipment (user equipment, UE), an access terminal, a terminal unit, a subscriber station, a terminal station, a mobile station, a remote station, a remote terminal, a user terminal (terminal equipment, TE), a mobile device, a wireless communication device, a terminal agent, a tablet computer (pad), a handheld device with a wireless communication function, a compute device, another processing device connected to a wireless modem, a vehicle-mounted device, a vehicle-mounted transceiver unit, a wearable device, or a terminal apparatus in a 5G network or an evolved public land mobile network (public land mobile network, PLMN) after 5G. The access terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device with a wireless communication function, a compute device, another processing device connected to a wireless modem, a vehicle-mounted device, an unmanned aerial vehicle, a robot, a smart point of sale (point of sale, POS) machine, customer-premises equipment (customer-premises equipment, CPE), a wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), or the like. Alternatively, the terminal may be a terminal having a communication function in an internet of things (internet of things, IoT), for example, a terminal in V2X (for example, an internet of vehicles device), a terminal in D2D communication, or a terminal in M2M communication. The terminal may be mobile or fixed.

Optionally, the access network device in this application may be a device configured to communicate with the terminal device, for example, may include an evolved NodeB (NodeB, eNB, or e-NodeB, evolved NodeB) in a long term evolution (long term evolution, LTE) system or an LTE-advanced (LTE-advanced, LTE-A) system, for example, a conventional macro base station eNB and a micro base station eNB in a heterogeneous network scenario. Alternatively, the access network device may include a next generation NodeB (next generation NodeB, gNB) in a new radio (new radio, NR) system. Alternatively, the access network device may include a transmission reception point (transmission reception point, TRP), a home base station (for example, a home evolved NodeB or a home NodeB, HNB), a baseband unit (baseband unit, BBU), a baseband unit pool (BBU pool), a wireless fidelity (wireless fidelity, Wi-Fi) access point (access point, AP), or the like. Alternatively, the access network device may include a base station in a non-terrestrial network (non-terrestrial network, NTN), that is, may be deployed on an airplane platform or a satellite. In the NTN, a network device or an access device may be used as a layer 1 (L1) relay (relay), may be used as a base station, or may be used as an integrated access and backhaul (integrated access and backhaul, IAB) node. Alternatively, the network device or the access device may be a device that implements functions of a base station in an IoT, for example, a device that implements the functions of the base station in unmanned aerial vehicle communication, V2X, D2D, or machine-to-machine (machine-to-machine, M2M).

In some possible scenarios, the access network device may alternatively be a module or unit that can implement some functions of a base station. For example, the access network device may be a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may also have different names, but a person skilled in the art may understand meanings thereof. For example, the access network device may be a network device in an open radio access network (open RAN, ORAN) system or a module of the network device. In an ORAN system, the CU may also be referred to as an open (open, O)-CU, the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP and the CU-UP), the DU, and the RU in this application may be implemented by using a software module, a hardware module, or a combination of a software module and a hardware module.

Optionally, the base station in embodiments of this application may include various forms of base stations, for example, a macro base station, a micro base station (or referred to as a small cell), a relay station, an access point, a home base station, a TRP, a transmitting point (transmitting point, TP), or a mobile switching center. This is not specifically limited in embodiments of this application.

Optionally, the core network device in this application may include, for example, the AMF network element, the SMF network element, the UPF network element, or the UDM network element in the foregoing 5G system. For a function of a related network element, refer to the descriptions of the 5G system shown in FIG. 1. Details are not described herein again.

It should be noted that the communication system described in embodiments of this application is intended to describe the technical solutions in embodiments of this application more clearly, but constitutes no limitation on the technical solutions provided in embodiments of this application. A person of ordinary skill in the art may learn that the technical solutions provided in embodiments of this application are also applicable to a similar technical problem as a network architecture evolves and a new service scenario emerges.

Optionally, functions related to the terminal device, the access network device, or the core network device in this application may be implemented by one device, may be jointly implemented by a plurality of devices, may be implemented by one or more functional modules in one device, or may be implemented by one or more chips, a system-on-chip (system-on-chip, SoC), or a chip system. The chip system may include a chip, or may include a chip and another discrete component. This is not specifically limited in embodiments of this application.

It may be understood that the foregoing function may be a network element in a hardware device, a software function running on dedicated hardware, a combination of hardware and software, or a virtualization function instantiated on a platform (for example, a cloud platform).

In embodiments of this application, the terminal device and the access network device include a hardware layer, an operating system layer running on the hardware layer, and an application layer running on the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that a program that records code of the method provided in embodiments of this application can be run to perform communication according to the method provided in embodiments of this application. For example, the method provided in embodiments of this application may be performed by the terminal device, the access network device, or a functional module that can invoke and execute the program and that is in the terminal device or the access network device.

It should be noted that a quantity and types of terminal devices included in the network architecture shown in FIG. 2 are merely examples. Embodiments of this application are not limited thereto. For example, more or fewer terminal devices that communicate with the access network device may be further included. For brevity, details are not described in the accompanying drawings.

In addition, in the network architecture shown in FIG. 2, although the access network device and the terminal device are shown, the application scenario may not be limited to including the access network device and the terminal device.

The technical solutions in embodiments of this application may be applied to various communication systems, such as a global system for mobile communications (global system for mobile communications, GSM) system, a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system, a new radio (new radio, NR) system, or a future communication system. This is not limited herein.

With reference to the foregoing network architecture, the following describes a communication method provided in an embodiment of this application.

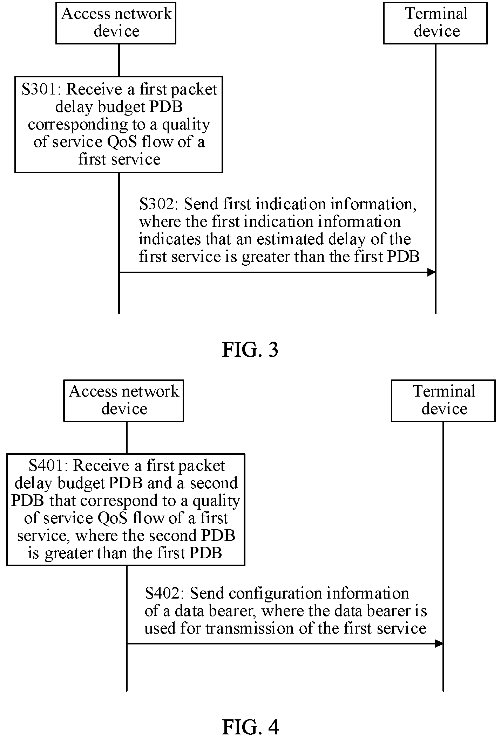

FIG. 3 is a schematic flowchart of a communication method according to an embodiment of this application. In this embodiment, a function performed by an access network device may alternatively be performed by a module (for example, a chip) in the access network device. In this application, a function performed by a terminal device may alternatively be performed by a module (for example, a chip) in the terminal device.

As shown in FIG. 3, the communication method may include the following steps.

**Step S301: The access network device receives a first packet delay budget PDB corresponding to a quality of service QoS flow of a first service.**

An estimated delay of the first service may be duration that is estimated by the access network device and that is needed for transmission of service data of the first service. For example, the service data of the first service may be a data packet.

For example, the first service may be a device-cloud collaboration service, for example, the foregoing cloud-based photo enhancement service and cloud-based game enhancement service.

In an implementation, a core network device may send, to the access network device, the first PDB and a second PDB corresponding to the QoS flow. Correspondingly, the access network device may receive the first PDB and the second PDB, where the second PDB is greater than the first PDB. Optionally, the core network device may further send (for example, transparently transmit) the first PDB and the second PDB to the terminal device.

For example, the first PDB may be 10s, and the second PDB may be 50s. A PDB is a transmission delay requirement of a group of continuous service data (one or more service data packets corresponding to one photo) or a service packet. For example, the service data of the first service is a group of continuous service data, and an amount of the service data of the first service is 100 Mbits. In other words, a requirement of the first PDB is that transmission of the data of 100 Mbits is completed within 10s, and a requirement of the second PDB is that transmission of the data of 100 Mbits is completed within 50s.

Optionally, the access network device may schedule the first service based on the requirement of the first PDB. If transmission of the first service cannot be completed in the first PDB due to insufficient air interface transmission resources, a poor channel of the UE, or the like, when determining that a transmission delay of the first service is greater than the first PDB, the access network device schedules the first service based on the requirement of the second PDB.

In this application, a QoS flow (or referred to as a QoS flow) is a channel resource indicating transmission of data packets having a same QoS requirement or similar QoS requirements. The QoS flow may also have another name, for example, a service flow, a bearer, or a service pipeline. This is not limited in this application.

**Step S302: The access network device sends first indication information to the terminal device, where the first indication information indicates that the estimated delay of the first service is greater than the first PDB.**

Correspondingly, the terminal device receives the first indication information from the access network device.

The first indication information may indicate that the first PDB cannot be completed, the first PDB cannot be ensured, or the like.

In an implementation, when determining that the estimated delay of the first service is greater than the first PDB, the access network device may send the first indication information to the terminal device. Correspondingly, the terminal device receives the first indication information from the access network device.

Optionally, in response to the first indication information, the terminal device may perform local processing on application layer service data corresponding to the first service, or send second indication information to a server corresponding to the first service. The second indication information indicates that the estimated delay of the first service is greater than the first PDB of the first service. For example, an access layer of the terminal device receives the first indication information. In response to the first indication information, the access layer of the terminal device may send indication information to a higher layer (for example, an application layer) of the terminal device, to trigger the application layer to start local processing on application layer data corresponding to the first service, or trigger the application layer to send the second indication information to the server corresponding to the first service.

For example, when the service data of the first service is a data packet corresponding to an image, the terminal device may send a data packet of a first image to the access network device. The terminal device displays a second image in response to the first indication information. The second image is obtained by the terminal device by performing local processing on the first image. Subsequently, the terminal device receives a data packet that is of a third image and that is sent by the access network device, where the third image is obtained by an application server corresponding to the first service through post-processing based on the first image. The terminal device displays the third image to replace the second image.

Optionally, the first indication information may be carried in one of the following signaling: radio resource control (radio resource control, RRC) signaling, layer 2 signaling, and physical layer signaling. The layer 2 signaling may be one of the following information: MAC layer control information, packet data convergence protocol PDCP control information, and service data adaptation protocol SDAP control information. A specific sending form of the first indication information is not limited in this embodiment of this application.

Optionally, the first indication information may further carry a sequence number of the first service or time information corresponding to a data packet of the first service. The terminal may determine, based on the sequence number of the first service or the time information corresponding to the data packet of the first service, a data packet whose PDB cannot be ensured. The sequence number of the first service may be a sequence number of a first data packet of the first service, or may be a sequence number of a service sequence of the first service.

Optionally, the access network device may further send duration information of a discard timer to the terminal device. The duration information of the discard timer is determined based on the second PDB. For example, duration of the discard timer may be the second PDB.

Optionally, the access network device sends, to the terminal device, configuration information of a data bearer corresponding to the QoS flow. The configuration information may be obtained based on the first PDB and/or the second PDB. Correspondingly, the terminal device receives the configuration information that is of the data bearer and that is sent by the access network device. The data bearer is used for transmission of the first service. For example, a discard timer in a bearer configuration is obtained based on the first PDB or the second PDB, and PDCP reordering timing in the bearer configuration is obtained based on the first PDB or the second PDB.

Optionally, the access network device may send the first PDB and the second PDB to the terminal device. Further, before receiving the first indication information, the terminal device may determine a remaining PDB based on the first PDB. The remaining PDB indicates remaining time determined based on a delay requirement of the first service. After receiving the first indication information, the terminal device determines the remaining PDB based on the second PDB. Further, the terminal device may report, to the access network device based on the determined remaining time, an indication indicating information related to the remaining time. The information related to the remaining time may be remaining duration, or the remaining time being less than a specific threshold.

Optionally, the terminal device may further receive configuration information of the quality of service QoS flow from the core network device. The QoS flow corresponds to the first PDB and the second PDB of the first service, and the second PDB is greater than the first PDB. For example, the core network device may transparently transmit the configuration information of the quality of service QoS flow to the terminal device.

Optionally, before receiving the first indication information, the terminal device may determine a remaining PDB based on the first PDB. The remaining PDB indicates remaining time determined based on the delay requirement of the first service. After receiving the first indication information, the terminal device determines the remaining PDB based on the second PDB. The terminal device may report, to the access network device based on the determined remaining time, an indication indicating information related to the remaining time. The information related to the remaining time may be remaining duration, or the remaining time being less than a specific threshold.

FIG. 4 is a schematic flowchart of another communication method according to an embodiment of this application. In this embodiment, a function performed by an access network device may alternatively be performed by a module (for example, a chip) in the access network device. In this application, a function performed by a terminal device may alternatively be performed by a module (for example, a chip) in the terminal device.

As shown in FIG. 4, the communication method may include the following steps.

**Step S401: The access network device receives a first packet delay budget PDB and a second PDB that correspond to a quality of service QoS flow of a first service, where the second PDB is greater than the first PDB.**

An estimated delay of the first service may be duration that is estimated by the access network device and that is needed for transmission of service data of the first service.

In an implementation, a core network device may send, to the access network device, the first PDB and a second PDB corresponding to the QoS flow. Correspondingly, the access network device may receive the first PDB and the second PDB. Optionally, the core network device may further send (for example, transparently transmit) the first PDB and the second PDB to the terminal device.

Optionally, the access network device may schedule the first service based on a requirement of the first PDB. When determining that a transmission delay of the first service is greater than the first PDB, the access network device schedules the first service based on a requirement of the second PDB.

For example, the first PDB may be 10s, and the second PDB may be 50s. A PDB is a transmission delay requirement of a group of continuous service data (one or more service data packets corresponding to one photo) or a service packet. For example, the service data of the first service is a group of continuous service data, and an amount of the service data of the first service is 100 Mbits. In other words, the requirement of the first PDB is that transmission of the data of 100 Mbits is completed within 10s, and the requirement of the second PDB is that transmission of the data of 100 Mbits is completed within 50s.

Optionally, the access network device may schedule the first service based on the requirement of the first PDB. If transmission of the first service cannot be completed in the first PDB due to insufficient air interface transmission resources, a poor channel of the UE, or the like, when determining that the transmission delay of the first service is greater than the first PDB, the access network device schedules the first service based on the requirement of the second PDB.

In this application, a QoS flow (or referred to as a QoS flow) is a channel resource indicating transmission of data packets having a same QoS requirement or similar QoS requirements. The QoS flow may also have another name, for example, a service flow, a bearer, or a service pipeline. This is not limited in this application.

**Step S402: The access network device sends configuration information of a data bearer to the terminal device, where the data bearer is used for transmission of the first service.**

Correspondingly, the terminal device receives the configuration information of the data bearer from the access network device.

The configuration information of the data bearer may be configuration information of a data bearer corresponding to the QoS flow. The configuration information may be obtained based on the first PDB and/or the second PDB. For example, a discard timer in a bearer configuration is obtained based on the first PDB or the second PDB, and PDCP reordering timing in the bearer configuration is obtained based on the first PDB or the second PDB.

In some embodiments, the access network device may further send first indication information to the terminal device. The first indication information indicates that the estimated delay of the first service is greater than the first PDB. For example, when determining that the estimated delay of the first service is greater than the first PDB, the access network device may send the first indication information to the terminal device. Correspondingly, the terminal device receives the first indication information from the access network device.

Optionally, in response to the first indication information, the terminal device may perform local processing on service layer service data corresponding to the first service, or send second indication information to a server corresponding to the first service. The second indication information indicates that the estimated delay of the first service is greater than the first PDB of the first service. For example, an access layer of the terminal device receives the first indication information. In response to the first indication information, the access layer of the terminal device may send indication information to a higher layer (for example, an application layer) of the terminal device, to trigger the application layer to start local processing on application layer data corresponding to the first service, or trigger the application layer to send the second indication information to the server corresponding to the first service.

For example, when the service data of the first service is a data packet corresponding to an image, the terminal device may send a data packet of a first image to the access network device. The terminal device displays a second image in response to the first indication information. The second image is obtained by the terminal device by performing local processing on the first image. Subsequently, the terminal device receives a data packet that is of a third image and that is sent by the access network device, where the third image is obtained by an application server corresponding to the first service through processing based on the first image. The terminal device displays the third image.

Optionally, the first indication information may be carried in one of the following signaling: radio resource control RRC signaling, layer 2 signaling, and physical layer signaling. The layer 2 signaling may be one of the following information: MAC layer control information, packet data convergence protocol PDCP control information, and service data adaptation protocol SDAP control information.

Optionally, the first indication information may further carry a sequence number of the first service or time information corresponding to a data packet of the first service. The terminal may determine, based on the sequence number of the first service or the time information corresponding to the data packet of the first service, a data packet whose PDB cannot be ensured. The sequence number of the first service may be a sequence number of a first data packet of the first service, or may be a sequence number of a service sequence of the first service.

Optionally, the access network device may further send duration information of a discard timer to the terminal device. The duration information of the discard timer is determined based on the second PDB. For example, duration of the discard timer may be the second PDB.

Optionally, the access network device may send the first PDB and the second PDB to the terminal device, and/or the core network device may transparently transmit the first PDB and the second PDB to the terminal device. Optionally, before receiving the first indication information, the terminal device may determine a remaining PDB based on the first PDB. The remaining PDB indicates remaining time determined based on a delay requirement of the first service. After receiving the first indication information, the terminal device determines the remaining PDB based on the second PDB. Further, the terminal device may report, to the access network device based on the determined remaining time, an indication indicating information related to the remaining time. The information related to the remaining time may be remaining duration, or the remaining time being less than a specific threshold.

Optionally, the terminal device may receive configuration information of the quality of service QoS flow from the core network device. The QoS flow corresponds to the first PDB and the second PDB of the first service, and the second PDB is greater than the first PDB. For example, the core network device may transparently transmit the configuration information of the quality of service QoS flow to the terminal device.

Optionally, before receiving the first indication information, the terminal device may determine a remaining PDB based on the first PDB. The remaining PDB indicates remaining time determined based on the delay requirement of the first service. After receiving the first indication information, the terminal device determines the remaining PDB based on the second PDB. The terminal device may report, to the access network device based on the determined remaining time, an indication indicating information related to the remaining time. The information related to the remaining time may be remaining duration, or the remaining time being less than a specific threshold.

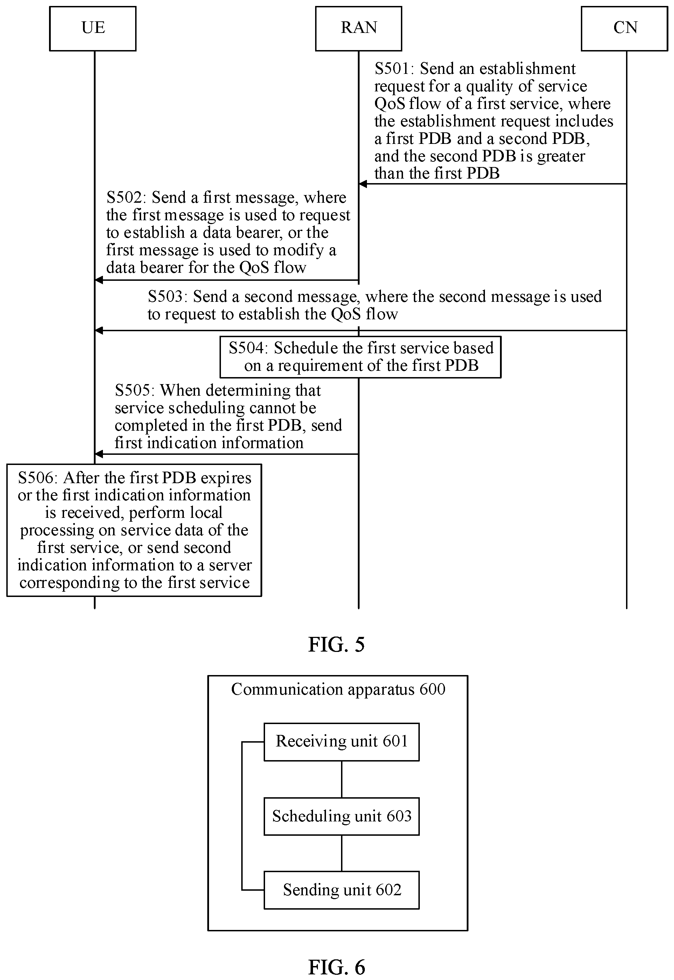

The foregoing method embodiments shown in FIG. 3 and FIG. 4 include many possible implementation solutions. The following describes some of the implementation solutions by using examples with reference to FIG. 5. It should be noted that, for related concepts, operations, or logical relationships that are not explained in FIG. 5, refer to corresponding descriptions in the embodiments shown in FIG. 3 and FIG. 4.

The following describes in detail the communication method provided in embodiments of this application by using an example in which the terminal device is a UE, the access network device is a RAN, and the core network device is a CN. FIG. 5 is a schematic flowchart of still another communication method according to an embodiment of this application. As shown in FIG. 5, the communication method may include the following steps.

**Step S501: A CN sends an establishment request for a quality of service QoS flow of a first service to a RAN, where the establishment request includes a first PDB and a second PDB, and the second PDB is greater than the first PDB.**

The first PDB is a delay that the RAN is expected to ensure to the greatest extent. If the first PDB cannot be ensured, the RAN may fall back to ensure the second PDB.

Optionally, before step S501, the CN may receive a request that is for requesting to establish a QoS flow and that is sent by a UE or a server corresponding to the first service. A parameter carried in the request may be the same as that in the establishment request. The request that is for requesting to establish the QoS flow and that is sent by the UE may be carried in a PDU session establishment or modification request.

Optionally, the CN may determine, based on feature matching of uplink and downlink data packets, to establish the QoS flow. For example, the CN may determine, based on a matching rule like an IP address, a port number, or an APP ID and uplink and downlink data, that a new QoS flow needs to be established.

Optionally, the QoS flow may correspond to one or more services.

For example, the establishment request for the QoS flow includes parameters such as a 5QI, a GFBR, and an MFBR. The 5QI may include the first PDB and the second PDB. For example, for a specific form of the parameter 5QI, refer to the related content in Table 2.

**Step S502: After receiving the establishment request, the RAN sends a first message to the UE, where the first message is used to request to establish a data bearer, or the first message is used to modify a data bearer for the QoS flow.**

It should be understood that, when the QoS flow is established for the first time, the first message is used to request to establish the DRB. If the QoS flow has been established, the first message is used to modify the data bearer for the QoS flow.

For example, the first message may be an RRC reconfiguration message. Some parameters in the RRC reconfiguration message are determined based on the first PDB and the second PDB.

Optionally, for an uplink service, to be specific, if the first service is an uplink service, the RAN may include a discard timer in the first message. Duration of the discard timer may be set based on the second PDB.

Optionally, the RAN may include the first PDB in the message.

**Step S503: The CN sends a second message to the UE, where the second message is used to request to establish the QoS flow.**

For example, the second message may be a PDU session-related message or a UE context-related message.

Optionally, the CN includes configuration information of the QoS flow in the message. The configuration information of the QoS flow includes parameters such as the first PDB and the second PBD.

It should be noted that a sequence of performing step S502 and step S503 is not limited in this embodiment of this application.

After the QoS flow and the DRB are established, the terminal device may send data to the access network device, or may send data to the server. Specifically, the terminal device may distribute a data packet to a corresponding QoS flow, and then send data of the corresponding QoS flow to the access network device or the server via a corresponding DRB.

**Step S504: The RAN schedules the first service based on a requirement of the first** PDB.

In some embodiments, after obtaining the first PDB and the second PDB, when performing data scheduling for the UE, the RAN may ensure, to the greatest extent based on the requirement of the first PDB, that data packet transmission can be completed in the first PDB. If the data packet transmission cannot be completed in the first PDB, data scheduling is performed based on a requirement of the second PDB.

**Step S505: When determining that service scheduling cannot be completed in the first PDB, the RAN sends first indication information to the UE.**

Optionally, for an uplink service, if determining that the service scheduling cannot be completed in the first PDB, the RAN may send an indication message (namely, the first indication information) to the UE. The indication message indicates that the first PDB cannot be completed. For example, the indication message may be RRC signaling, layer 2 signaling (PDCP signaling, RLC signaling, or MAC signaling), or physical layer signaling. This is not limited in this embodiment of this application. The indication message may further carry index information of the DRB, index information of the QoS flow, or other service identification information.

For example, for a photo upload service, if it is initially negotiated that transmission of data of 100 Mbits is completed within 10s, the requirement of the first PDB is 10s, and a data burst is 100 Mbits. After the RAN spends 5s in scheduling data of 50 Mbits, it is found that transmission of the remaining data of 50 M cannot be completed within the remaining 5s due to deterioration of a signal of the UE or cell congestion. In this case, the RAN may notify, by using the first indication information, the terminal device that the first PDB cannot be ensured for the service. Assuming that the second PDB is 50s, the RAN may consider that there are still 45s left to complete scheduling of the remaining data of 50 M.

**Step S506: After the first PDB expires or the terminal device receives the first indication information, the terminal device performs local processing on service data of the first service, or sends second indication information to the server corresponding to the first service.**

In some embodiments, the first service is an uplink service. In this case, after the first PDB expires or the terminal device receives the first indication information, the terminal device performs local processing on the service data of the first service.

For example, the first service is cloud-based photo enhancement in a device-cloud collaboration service. Specifically, the terminal device uploads a local photo to a cloud (that is, the server corresponding to the first service), the cloud performs processing and then sends a cloud-processed photo to the terminal device, and the terminal device displays the cloud-processed photo. In this case, assuming that the first service is uploading a local photo, when the terminal device receives the first PDB and cannot ensure the first PDB, the terminal device may determine that local photo enhancement processing needs to be started, so that a processing result can be displayed to a user in time, and transmission of the data of the first service continues to be performed. After the local photo is uploaded to the cloud, processing of the photo is completed, and a processed photo is returned to the local end, the cloud-processed photo is used to replace an enhancement result of the local photo.

In some other embodiments, the first service is a downlink service. In this case, after the first PDB expires or the terminal device receives the first indication information, the terminal device sends the second indication information to the server corresponding to the first service. The second indication information indicates that an estimated delay of the first service is greater than the first PDB of the first service. Specifically, the terminal device may send the second indication information to a higher layer.

Optionally, the terminal device may report a remaining PDB in a buffer status report (Buffer Status report, BSR). The remaining PDB is for representing remaining time by subtracting elapsed time (which is calculated from time at which a data packet arrives at a buffer) from a PDB budget corresponding to the data packet or a group of data. Before the first PDB expires or the terminal device receives a notification that is sent by a network and that indicates that the first PDB cannot be ensured, the terminal device may calculate the remaining PDB based on the first PDB. After the first PDB expires or the terminal device receives the notification that is sent by the network and that indicates that the first PDB cannot be ensured, the terminal device calculates the remaining PDB based on the second PDB.

FIG. 6 is a diagram of a structure of a communication apparatus according to an embodiment of this application. The apparatus may be an access network device, or may be a module (for example, a chip) in the access network device. As shown in FIG. 6, the apparatus 600 includes at least a receiving unit 601 and a sending unit 602.

The receiving unit 601 is configured to receive a first packet delay budget PDB corresponding to a quality of service QoS flow of a first service.

The sending unit 602 is configured to send first indication information to a terminal device, where the first indication information indicates that an estimated delay of the first service is greater than the first PDB.

In a possible implementation, when it is determined that the estimated delay of the first service is greater than the first PDB, the sending unit 602 is configured to send the first indication information to the terminal device.

In a possible implementation, the estimated delay of the first service is duration that is estimated by the communication apparatus and that is needed for transmission of service data of the first service.

In a possible implementation, the receiving unit 601 is configured to receive a second PDB corresponding to the QoS flow, where the second PDB is greater than the first PDB.

In a possible implementation, the sending unit 602 is configured to send duration information of a discard timer to the terminal device, where the duration information of the discard timer is determined based on the second PDB.

In a possible implementation, the sending unit 602 is configured to send, to the terminal device, configuration information of a data bearer corresponding to the QoS flow, where the configuration information is obtained based on the first PDB and/or the second PDB.

In a possible implementation, the sending unit 602 is configured to send the first PDB and the second PDB to the terminal device.

In a possible implementation, the apparatus further includes a scheduling unit 603. The scheduling unit 603 is configured to:
schedule the first service based on a requirement of the first PDB; and
when it is determined that a transmission delay of the first service is greater than the first PDB, schedule the first service based on a requirement of the second PDB.

In a possible implementation, the first indication information is carried in one of the following signaling: radio resource control RRC signaling, layer 2 signaling, and physical layer signaling.

In a possible implementation, the layer 2 signaling is one of the following information: MAC layer control information, packet data convergence protocol PDCP control information, and service data adaptation protocol SDAP control information.

In a possible implementation, the first indication information carries a sequence number of the first service or time information corresponding to a data packet of the first service.

For more detailed descriptions of the receiving unit 601, the sending unit 602, and the scheduling unit 603, directly refer to related descriptions of the access network device in the method embodiments shown in FIG. 3 to FIG. 5. Details are not described herein again.

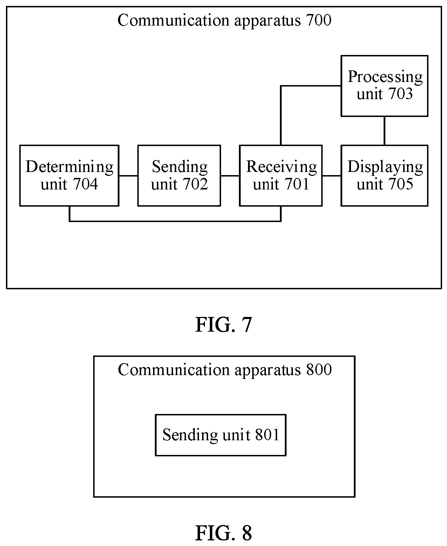

FIG. 7 is a diagram of a structure of another communication apparatus according to an embodiment of this application. The apparatus may be a terminal device, or may be a module (for example, a chip) in the terminal device. As shown in FIG. 7, the apparatus 700 includes at least a receiving unit 701.

The receiving unit 701 is configured to receive configuration information that is of a data bearer and that is sent by an access network device, where the data bearer is used for transmission of a first service.

The receiving unit 701 is configured to receive first indication information sent by the access network device, where the first indication information indicates that an estimated delay of the first service is greater than a first packet delay budget PDB of the first service.

In a possible implementation, the receiving unit 701 is configured to receive configuration information of a quality of service QoS flow from a core network device, where the QoS flow corresponds to the first PDB and a second PDB of the first service, and the second PDB is greater than the first PDB.

In a possible implementation, the apparatus further includes a processing unit 703. The processing unit is configured to perform local processing on service data of the first service in response to the first indication information.

The sending unit 702 is configured to send, in response to the first indication information, second indication information to a server corresponding to the first service, where the second indication information indicates that the estimated delay of the first service is greater than the first PDB of the first service.

In a possible implementation, the receiving unit 701 is configured to receive duration information that is of a discard timer and that is sent by the access network device, where the duration information of the discard timer is determined based on the second PDB, and the second PDB is greater than the first PDB.

In a possible implementation, the receiving unit 701 is configured to receive the first PDB and the second PDB that are sent by the access network device, where the second PDB is greater than the first PDB.

In a possible implementation, the apparatus further includes a determining unit 704. The determining unit 704 is configured to: before the first indication information is received, determine a remaining PDB based on the first PDB, where the remaining PDB indicates remaining time of a delay requirement for completing the first service; and
after the first indication information is received, determine the remaining PDB based on the second PDB.

In a possible implementation, the service data of the first service is a first image, and the apparatus further includes a displaying unit 705.

The sending unit 702 is configured to send the first image to the access network device.

The displaying unit 705 is configured to display a second image in response to the first indication information, where the second image is obtained by the communication apparatus by performing local processing on the first image.

The receiving unit 701 is configured to receive a third image sent by the access network device, where the third image is obtained based on the first image.

The displaying unit 705 is configured to display the third image.

For more detailed descriptions of the receiving unit 701, the sending unit 702, the processing unit 703, the determining unit 704, and the displaying unit 705, directly refer to related descriptions of the terminal device in the method embodiments shown in FIG. 3 to FIG. 5. Details are not described herein again.

FIG. 8 is a diagram of a structure of still another communication apparatus according to an embodiment of this application. The apparatus may be a core network device, or may be a module (for example, a chip) in the core network device. As shown in FIG. 8, the apparatus 800 includes at least a sending unit 801.

The sending unit 801 is configured to send a first packet delay budget PDB and a second PDB that correspond to a quality of service QoS flow of a first service, where the second PDB is greater than the first PDB.

For more detailed descriptions of the sending unit 801, directly refer to related descriptions of the core network device in the method embodiments shown in FIG. 3 to FIG. 5. Details are not described herein again.

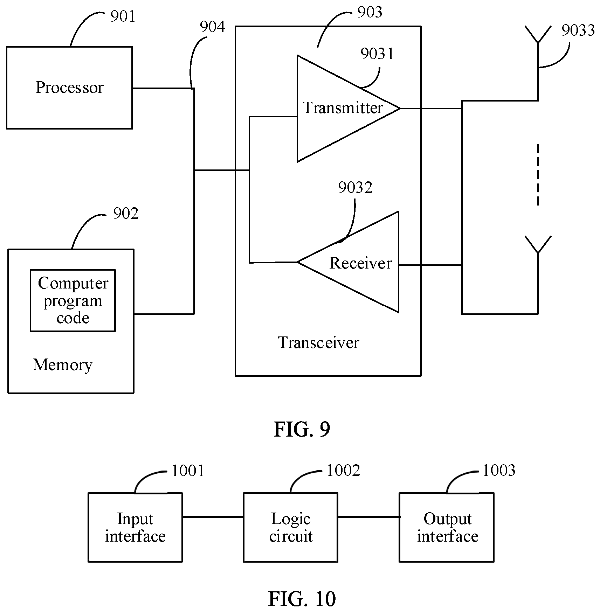

Based on the foregoing network architecture, FIG. 9 is a diagram of a structure of yet another communication apparatus according to an embodiment of this application. As shown in FIG. 9, the communication apparatus may include a processor 901, a memory 902, a transceiver 903, and a bus 904. The memory 902 may exist independently, and may be connected to the processor 901 through the bus 904. Alternatively, the memory 902 may be integrated with the processor 901. The bus 904 is configured to implement connections between these components. In a case, as shown in FIG. 9, the transceiver 903 may include a transmitter 9031, a receiver 9032, and an antenna 9033. In another case, the transceiver 903 may include a transmitter machine (namely, an output interface) and a receiver machine (namely, an input interface). The transmitter machine may include a transmitter and an antenna, and the receiver machine may include a receiver and an antenna.

The communication apparatus may be an access network device or a module in the access network device. When computer program instructions stored in the memory 902 are executed, the processor 901 may be configured to perform the foregoing embodiments, and the transceiver 903 may be configured to perform operations performed by the receiving unit 601 and the sending unit 602 in the foregoing embodiments. The communication apparatus may be further configured to perform various methods performed by the access network device in the method embodiments in FIG. 3 to FIG. 5. Details are not described again.

The communication apparatus may be a terminal device, or may be a module in the terminal device. When computer program instructions stored in the memory 902 are executed, the processor 901 may be configured to perform the foregoing embodiments, and the transceiver 903 may be configured to perform operations performed by the receiving unit 701 and the sending unit 702 in the foregoing embodiments. The communication apparatus may be further configured to perform various methods performed by the terminal device in the method embodiments in FIG. 3 to FIG. 5. Details are not described again.

The communication apparatus may be a core network device, or may be a module in the core network device. When computer program instructions stored in the memory 902 are executed, the processor 901 may be configured to perform the foregoing embodiments, and the transceiver 903 may be configured to perform operations performed by the sending unit 801 in the foregoing embodiment. The communication apparatus may be further configured to perform various methods performed by the core network device in the method embodiments in FIG. 3 to FIG. 5. Details are not described again.

Based on the foregoing network architecture, FIG. 10 is a diagram of a structure of yet still another communication apparatus according to an embodiment of this application. As shown in FIG. 10, the communication apparatus may include an input interface 1001, a logic circuit 1002, and an output interface 1003. The input interface 1001 is connected to the output interface 1003 through the logic circuit 1002. The input interface 1001 is configured to receive information from another communication apparatus, and the output interface 1003 is configured to output, schedule, or send information to another communication apparatus. The logic circuit 1002 is configured to perform an operation other than operations of the input interface 1001 and the output interface 1003, for example, implement a function implemented by the processor 901 in the foregoing embodiment. The communication apparatus may be an access network device (or a module in the access network device), a terminal device (or a module in the terminal device), or a core network device (or a module in the core network device). For more detailed descriptions of the input interface 1001, the logic circuit 1002, and the output interface 1003, directly refer to related descriptions of the access network device, the terminal device, and the core network device in the foregoing method embodiments. Details are not described herein again.

An embodiment of this application further discloses a computer-readable storage medium. The computer-readable storage medium stores instructions. When the instructions are executed, the methods in the foregoing method embodiments are performed.

An embodiment of this application further discloses a computer program product including instructions. When the instructions are executed, the methods in the foregoing method embodiments are performed.

An embodiment of this application further discloses a communication system. The communication system may include a terminal device and an access network device. For specific descriptions, refer to the communication methods shown in FIG. 3 to FIG. 5.

In the foregoing specific implementations, the objectives, technical solutions, and beneficial effects of this application are further described in detail. It should be understood that the foregoing descriptions are merely specific implementations of this application, but are not intended to limit the protection scope of this application. Any modification, equivalent replacement, improvement, or the like made based on the technical solutions of this application shall fall within the protection scope of this application.

## Claims

1. A communication method, wherein the method comprises:
receiving, by an access network device, a first packet delay budget PDB corresponding to a quality of service QoS flow of a first service; and
sending, by the access network device, first indication information to a terminal device, wherein the first indication information indicates that an estimated delay of the first service is greater than the first PDB.

2. The communication method according to claim 1, wherein the sending, by the access network device, the first indication information to the terminal device comprises:
when determining that the estimated delay of the first service is greater than the first PDB, sending, by the access network device, the first indication information to the terminal device.

3. The communication method according to claim 1 or 2, wherein the estimated delay of the first service is duration that is estimated by the access network device and that is needed for transmission of service data of the first service.

4. The communication method according to any one of claims 1 to 3, wherein the method further comprises:
receiving, by the access network device, a second PDB corresponding to the QoS flow, wherein the second PDB is greater than the first PDB.

5. The communication method according to claim 4, wherein the method further comprises:
sending, by the access network device, duration information of a discard timer to the terminal device, wherein the duration information of the discard timer is determined based on the second PDB.

6. The communication method according to claim 4 or 5, wherein the method further comprises:
sending, by the access network device to the terminal device, configuration information of a data bearer corresponding to the QoS flow, wherein the configuration information is obtained based on the first PDB and/or the second PDB.

7. The communication method according to any one of claims 4 to 6, wherein the method further comprises:
sending, by the access network device, the first PDB and the second PDB to the terminal device.

8. The communication method according to any one of claims 4 to 7, wherein the method further comprises:
scheduling, by the access network device, the first service based on a requirement of the first PDB; and
when determining that a transmission delay of the first service is greater than the first PDB, scheduling, by the access network device, the first service based on a requirement of the second PDB.

9. The communication method according to any one of claims 1 to 8, wherein the first indication information is carried in one of the following signaling: radio resource control RRC signaling, layer 2 signaling, and physical layer signaling.

10. The communication method according to claim 9, wherein the layer 2 signaling is one of the following information: MAC layer control information, packet data convergence protocol PDCP control information, and service data adaptation protocol SDAP control information.

11. The communication method according to any one of claims 1 to 10, wherein the first indication information carries a sequence number of the first service or time information corresponding to a data packet of the first service.

12. A communication method, wherein the method comprises:
receiving, by a terminal device, configuration information that is of a data bearer and that is sent by an access network device, wherein the data bearer is used for transmission of a first service; and
receiving, by the terminal device, first indication information sent by the access network device, wherein the first indication information indicates that an estimated delay of the first service is greater than a first packet delay budget PDB of the first service.

13. The communication method according to claim 12, wherein the method further comprises:
receiving, by the terminal device, configuration information of a quality of service QoS flow from a core network device, wherein the QoS flow corresponds to the first PDB and a second PDB of the first service, and the second PDB is greater than the first PDB.

14. The communication method according to claim 12 or 13, wherein the method further comprises:
in response to the first indication information, performing, by the terminal device, local processing on service data of the first service, or sending second indication information to a server corresponding to the first service, wherein the second indication information indicates that the estimated delay of the first service is greater than the first PDB of the first service.

15. The communication method according to any one of claims 12 to 14, wherein the method further comprises:
receiving, by the terminal device, duration information that is of a discard timer and that is sent by the access network device, wherein the duration information of the discard timer is determined based on the second PDB, and the second PDB is greater than the first PDB.

16. The communication method according to any one of claims 12 to 15, wherein the method further comprises:
receiving, by the terminal device, the first PDB and the second PDB that are sent by the access network device, wherein the second PDB is greater than the first PDB.

17. The communication method according to claim 16, wherein the method further comprises:
before receiving the first indication information, determining, by the terminal device, a remaining PDB based on the first PDB, wherein the remaining PDB indicates remaining time of a latency requirement for completing the first service; and
after receiving the first indication information, determining, by the terminal device, the remaining PDB based on the second PDB.

18. The communication method according to any one of claims 12 to 17, wherein the service data of the first service is a first image, and the method further comprises:
sending, by the terminal device, the first image to the access network device;
displaying, by the terminal device, a second image in response to the first indication information, wherein the second image is obtained by the terminal device by performing local processing on the first image;
receiving, by the terminal device, a third image sent by the access network device, wherein the third image is obtained based on the first image; and
displaying, by the terminal device, the third image.

19. A communication method, wherein the method comprises:
sending, by a core network device, a first packet delay budget PDB and a second PDB that correspond to a quality of service QoS flow of a first service, wherein the second PDB is greater than the first PDB.

20. A communication apparatus, wherein the apparatus comprises:
a receiving unit, configured to receive a first packet delay budget PDB corresponding to a quality of service QoS flow of a first service; and
a sending unit, configured to send first indication information to a terminal device, wherein the first indication information indicates that an estimated delay of the first service is greater than the first PDB.

21. The communication apparatus according to claim 20, wherein when it is determined that the estimated delay of the first service is greater than the first PDB, the sending unit is configured to send the first indication information to the terminal device.

22. The communication apparatus according to claim 20 or 21, wherein the estimated delay of the first service is duration that is estimated by the communication apparatus and that is needed for transmission of service data of the first service.

23. The communication apparatus according to any one of claims 20 to 22, wherein
the receiving unit is configured to receive a second PDB corresponding to the QoS flow, wherein the second PDB is greater than the first PDB.

24. The communication apparatus according to claim 23, wherein the sending unit is configured to send duration information of a discard timer to the terminal device, wherein the duration information of the discard timer is determined based on the second PDB.

25. The communication apparatus according to claim 23 or 24, wherein the sending unit is configured to send, to the terminal device, configuration information of a data bearer corresponding to the QoS flow, wherein the configuration information is obtained based on the first PDB and/or the second PDB.

26. The communication apparatus according to any one of claims 23 to 25, wherein the sending unit is configured to send the first PDB and the second PDB to the terminal device.

27. The communication apparatus according to any one of claims 23 to 25, wherein the apparatus further comprises a scheduling unit, and the scheduling unit is configured to:
schedule the first service based on a requirement of the first PDB; and
when it is determined that a transmission delay of the first service is greater than the first PDB, schedule the first service based on a requirement of the second PDB.

28. The communication apparatus according to any one of claims 20 to 27, wherein the first indication information is carried in one of the following signaling: radio resource control RRC signaling, layer 2 signaling, and physical layer signaling.

29. The communication apparatus according to claim 28, wherein the layer 2 signaling is one of the following information: MAC layer control information, packet data convergence protocol PDCP control information, and service data adaptation protocol SDAP control information.

30. The communication apparatus according to any one of claims 20 to 29, wherein the first indication information carries a sequence number of the first service or time information corresponding to a data packet of the first service.

31. A communication apparatus, wherein the apparatus comprises:
a receiving unit, configured to receive configuration information that is of a data bearer and that is sent by an access network device, wherein the data bearer is used for transmission of a first service; and
a sending unit, configured to receive first indication information sent by the access network device, wherein the first indication information indicates that an estimated delay of the first service is greater than a first packet delay budget PDB of the first service.

32. The communication apparatus according to claim 31, wherein the receiving unit is configured to receive configuration information of a quality of service QoS flow from a core network device, wherein the QoS flow corresponds to the first PDB and a second PDB of the first service, and the second PDB is greater than the first PDB.

33. The communication apparatus according to claim 31 or 32, wherein the apparatus further comprises a processing unit, wherein the processing unit is configured to perform local processing on service data of the first service in response to the first indication information; and
the sending unit is configured to send, in response to the first indication information, second indication information to a server corresponding to the first service, wherein the second indication information indicates that the estimated delay of the first service is greater than the first PDB of the first service.

34. The communication apparatus according to any one of claims 31 to 33, wherein the receiving unit is configured to receive duration information that is of a discard timer and that is sent by the access network device, wherein the duration information of the discard timer is determined based on the second PDB, and the second PDB is greater than the first PDB.

35. The communication apparatus according to any one of claims 31 to 34, wherein the receiving unit is configured to receive the first PDB and the second PDB that are sent by the access network device, wherein the second PDB is greater than the first PDB.

36. The communication apparatus according to claim 35, wherein the apparatus further comprises a determining unit, wherein the determining unit is configured to: before the first indication information is received, determine a remaining PDB based on the first PDB, wherein the remaining PDB indicates remaining time of a delay requirement for completing the first service; and
after the first indication information is received, determine the remaining PDB based on the second PDB.

37. The communication apparatus according to any one of claims 31 to 36, wherein the service data of the first service is a first image, and the apparatus further comprises a displaying unit, wherein
the sending unit is configured to send the first image to the access network device;
the displaying unit is configured to display a second image in response to the first indication information, wherein the second image is obtained by the communication apparatus by performing local processing on the first image;
the receiving unit is configured to receive a third image sent by the access network device, wherein the third image is obtained based on the first image; and
the displaying unit is configured to display the third image.

38. A communication apparatus, wherein the apparatus comprises:
a sending unit, configured to send a first packet delay budget PDB and a second PDB that correspond to a quality of service QoS flow of a first service, wherein the second PDB is greater than the first PDB.

39. A communication apparatus, comprising a processor and a memory, wherein the processor is coupled to the memory, and the processor invokes a computer program stored in the memory to implement the method according to any one of claims 1 to 19.

40. A computer-readable storage medium, wherein the computer-readable storage medium stores a computer program or computer instructions, and when the computer program or the computer instructions is/are run by a processor, the method according to any one of claims 1 to 19 is implemented.

41. A computer program product, wherein the computer program product comprises computer program code, and when the computer program code is run by a processor, the method according to any one of claims 1 to 19 is implemented.

42. A communication system, wherein the communication system comprises an access network device, a terminal device, and a core network device, the access network device is configured to perform the method according to any one of claims 1 to 11, the terminal device is configured to perform the method according to any one of claims 12 to 18, and the core network device is configured to perform the method according to claim 19.
